(19) Europäisches Patentamt
European Patent Office
Office européen des brevets

(11) Veröffentlichungsnummer: **0 530 558 A2**

(12) # EUROPÄISCHE PATENTANMELDUNG

(21) Anmeldenummer: **92113801.2**

(22) Anmeldetag: **13.08.92**

(51) Int. Cl.[5]: **C08L 71/02**, C08L 25/02, C08K 3/22, C08K 5/49, C08L 27/18, C08K 5/3492

(30) Priorität: **27.08.91 DE 4128350**

(43) Veröffentlichungstag der Anmeldung: **10.03.93 Patentblatt 93/10**

(84) Benannte Vertragsstaaten: **BE DE FR GB NL**

(71) Anmelder: **BASF Aktiengesellschaft**
**Carl-Bosch-Strasse 38**
**W-6700 Ludwigshafen(DE)**

(72) Erfinder: **Zeltner, Doris, Dr.**
**Viehtriftstrasse 94**
**W-6725 Roemerberg(DE)**
Erfinder: **Weiss, Robert, Dr.**
**Bruesseler Ring 53**
**W-6700 Ludwigshafen(DE)**
Erfinder: **Seelert, Stefan, Dr.**
**Albrecht-Duerer-Ring 23a**
**W-6710 Frankenthal(DE)**

(54) **Selbstverlöschende thermoplastische Formmassen auf der Basis von niedermolekularen Polyphenylenethern.**

(57) Selbstverlöschende thermoplastische Formmassen, enthaltend
A) 4 - 94 Gew.-% eines Polyphenylenethers mit einem mittleren Molekulargewicht $\overline{M}_w$ von 8000 bis 30 000,
B) 5 - 94 Gew.-% eines vinylaromatischen Polymeren
C) 1 - 30 Gew.-% eines Flammschutzmittels aufgebaut aus
C1) mindestens einer phosphorhaltigen Verbindung
C2) Polytetrafluorethylen
C3) gegebenenfalls eines Triazinderivates
sowie
D) 0 - 60 Gew.-% sonstiger Zusatzstoffe in wirksamen Mengen.

EP 0 530 558 A2

Die Erfindung betrifft selbstverlöschende thermoplastische Formmassen, enthaltend

A) 4 - 94 Gew.-% eines Polyphenylenethers mit einem mittleren Molekulargewicht $\overline{M}_w$ von 8000 bis 30 000,

B) 5 - 94 Gew.-% eines vinylaromatischen Polymeren

C) 1 - 30 Gew.-% eines Flammschutzmittels aufgebaut aus

C1) mindestens einer phosphorhaltigen Verbindung

C2) Polytetrafluorethylen

C3) gegebenenfalls eines Triazinderivates

sowie

D) 0 - 60 Gew.-% sonstiger Zusatzstoffe in wirksamen Mengen.

Weiterhin betrifft die Erfindung ein Verfahren zur Herstellung dieser-Formmassen.

Außerdem betrifft die Erfindung die Verwendung dieser Formmassen zur Herstellung von Fasern, Folien und Formkörpern sowie die aus den erfindungsgemäßen Formmassen erhältlichen Formkörper.

Aus der EP-A 311 909 sind Polyphenylether/Polystyrol bzw. HIPS Mischungen bekannt, welche eine Mischung aus phosphorhaltigen Verbindungen und einem Triazinderivat als Flammschutzkombination enthalten. Der Zusatz des Triazinderivates beeinträchtigt jedoch die mechanischen Eigenschaften, insbesondere die Schlagzähigkeit der Formkörper erheblich.

Aus den DE-A 27 56 458, DE-A 25 54 324 und EP-A 178 280 sind flammhemmende Zusätze für PPE/HIPS bzw. Polystyrol bekannt, welche Polytetrafluor-ethylene in Kombination mit phosphorhaltigen Verbindungen enthalten.

Der Zusatz des Polytetrafluorethylens zu PPE Mischungen, in denen der Polyphenylenether übliche Molekulargewichte zwischen 40 000 und 50 000 aufweist, vermindert die Farbqualität der Formköper (Gelbfärbung) und verschlechtert durch Zunahme der Brandzeiten die flammhemmende Wirkung der Flammschutzkombination.

Aus der DE-A 22 22 230 und US-A 27 51 329 sind Formmassen aus niedermolekularem PPE mit vinylaromatischen Polymeren bekannt.

Diese können bis zu 50 Gew.-% eines der zahlreichen bekannten Flammschutzmittel enthalten.

Der vorliegenden Erfindung lag daher die Aufgabe zugrunde, thermoplastische Formmassen auf der Basis von niedermolekularen Polyphenylenethern und vinylaromatischen Polymeren zur Verfügung zu stellen, die gute mechanische Eigenschaften(insbesondere eine gute Schlagzähigkeit) bei gleichzeitig guten Flaumschutzeigenschaften und heller Eigenfarbe aufweisen.

Demgemäß wurden die eingangs definierten flammgeschützten thermoplastischen Formmassen gefunden. Bevorzugte Massen dieser Art sind den Unteransprüchen zu entnehmen.

Weiterhin wurden Verfahren zur Herstellung dieser thermoplastischen Formmassen, deren Verwendung zur Herstellung von Fasern, Folien und Formkörpern sowie die hierbei erhältlichen Formkörper gefunden.

Die in den erfindungsgemäßen Formmassen enthaltenen Polyphenylenether A) sind an sich bekannt. Die Polyphenylenether A) sind in den erfindungsgemäßen Formmassen in Mengen von 4 bis 94, bevorzugt 15 bis 80 und insbesondere 35 bis 60 Gew.-% enthalten.

Es handelt sich um Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Beispiele für Polyphenylenether sind Poly(2,6-dilauryl-1,4-phenylenether) Poly(2,6-diphenyl-1,4-phenylenether), Poly(2,6-dimethoxi-1,4-phenylenether), Poly(2,6-diethoxi-1,4-phenylenether), Poly(2-methoxi-6-ethoxi-1,4-phenylenether), Poly(2-ethyl-6-stearyloxi-1,4-phenylenether), Poly-(2,6-dichlor-1,4-phenylenether), Poly(2-methyl-6-phenyl-1,4-phenylen-ether), Poly(2,6-dibenzyl-1,4-phenylenether), Poly(2-ethoxi-1,4-phenylenether), Poly(2-chlor-1,4-phenylenether), poly(2,5-dibrom-1,4-phenylenether).Bevorzugt werden Polyphenylenether eingesetzt, bei denen die Substituenten Alkylreste mit 1 bis 4 Kohlenstoffatomen sind, wie Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Unter Polyphenylenethern im Sinne der Erfindung sollen auch solche verstanden werden, die mit Monomeren wie Fumarsäure, Maleinsäure oder Maleinsäureanhydrid modifiziert sind.

Derartige Polyphenylenether sind u.a. in der WO 87/00540 beschrieben.

Hinsichtlich der physikalischen Eigenschaften der Polyphenylenether werden solche in den erfindungsgemäßen Formmassen eingesetzt, die ein mittleres Molekulargewicht $M_w$ (Gewichtsmittel) von 8000 bis 30 000, bevorzugt 12 000 bis 25 000 und insbesondere 15 000 bis 25 000 aufweisen.

Dies entspricht einer Grenzviskosität von 0,18 bis .0,45, bevorzugt von 0,25 bis 0,42 und insbesondere von 0,3 bis 0,42 dl/g, gemessen in Chloroform bei 30 °C.

Die Bestimmung der Molekulargewichtsverteilung erfolgt im allgemeinen mittels Gelpermeotionschromatographie (Shodex-Trennsäulen 0,8 x 50 cm des Typs A 803, A 804 und A 805 mit THF als Editionsmittel bei Raumtemperatur). Die Lösung der PPE-Proben in THF erfolgt unter Druck bei 110 °C, wobei 0,16 ml einer 0,25 gew.-%igen Lösung injiziert werden.

Die Detektion erfolgt im allgemeinen mit einem UV-Detektor. Die Eichung der Säulen wurde mit PPE Proben durchgeführt, deren absolute Molekulargewichtsverteilungen durch eine G PC-Laser-Lichtstreuungskontinuation bestimmt wurde.

Die Komponente B) ist in den erfindungsgemäßen Formmassen in Mengen von 5 bis 94, bevorzugt 10 bis 80 und insbesondere 35 bis 60 Gew.-% enthalten, bezogen auf das Gesamtgewicht der Komponenten A) bis C) sowie gegebenenfalls D).

Die Komponente B) ist ein vinylaromatisches Polymer, das vorzugsweise mit dem eingesetzten Polyphenylenether verträglich ist.

Beispiele für bevorzugte, mit Polyphenylenethern verträgliche vinylaromatische Polymere sind der Monographie von O. Olabisi, Polymer-Polymer Miscibility, 1979, S. 224 bis 230 und 245 zu entnehmen.

Es kommen sowohl Homo- als auch Copolymerisate von vinylaromatischen Monomeren mit 8 bis 12 C-Atomen in Betracht.

Als monovinylaromatische Verbindungen kommen dabei insbesondere Styrol in Betracht, ferner die kern- oder seitenkettenalkylierten Styrole. Als Beispiele seien Chlorstyrol, $\alpha$-Methylstyrol, Styrol, p-Methylstyrol, Vinyltoluol und p-tert.-Butylstyrol genannt. Vorzugsweise wird jedoch Styrol allein verwendet.

Die Homopolymerisate werden im allgemeinen nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim 1980).

Die Homopolymerisate können Gewichtsmittel des Molekulargewichts Mw von 100 bis 300 000 aufweisen, die nach üblichen Methoden bestimmt werden können.

Als Comonomere zur Herstellung von Copolymerisaten kommen z.B. (Meth)acrylsäure, (Meth)-acrylsäurealkylester mit 1 bis 4 C-Atomen im Alkylrest, Acrylnitril und Maleinsäureanhydrid sowie Maleinsäureimide, Acrylamid und Methacrylamide sowie deren N,N oder N-alkylsubstituierten Derivate mit 1 bis 10 C-Atomen im Alkylrest in Frage.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in der US-P 4 360 618, 4 405 753 und in der Veröffentlichung von J.R. Fried, G.A. Hanna, Polymer Eng. Scie. Band 22 (1982) Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980) beschrieben sind. Die Copolymerisate haben im allgemeinen Gewichtsmittel des Molekulargewichtes ($M_w$) von 10 000 bis 300 000, die nach üblichen Methoden bestimmt werden können.

Bei der Komponente B) handelt es sich vorzugsweise um schlagfest modifiziertes Polystyrol, dessen Kautschukgehalt im allgemeinen von 3 bis 20 Gew.-%, vorzugsweise von 4 bis 15 Gew.-% beträgt.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2 694 692 beschrieben ist, und Verfahren zur Massesuspensionspolymerisation, wie sie beispielsweise in der US-Patentschrift 2 862 906 beschrieben sind. Selbstverständlich sind auch andere Verfahren anwendbar, sofern die gewünschte Teilchengröße der Kautschukphase eingestellt wird.

Als Kautschuke werden die üblicherweise für die Schlagzähmodifizierung von Styrolpolymerisaten gebräuchlichen natürlichen oder synthetischen Kautschuke eingesetzt. Geeignete Kautschuke im Sinne der Erfindung sind neben Naturkautschuk z.B. Polybutadien, Polyisopren und Mischpolymerisate des Butadiens und/oder Isoprens mit Styrol und anderen Comonomeren, die eine Glastemperatur, bestimmt nach K.H. Illers und H. Breuer, Kolloidzeitschrift 190 (1), 16 bis 34 (1963), unter -20 °C besitzen.

Es können auch Mischungen von schlagfest modifizierten und nichtmodifizierten vinylaromatischem Polymeren eingesetzt werden, wobei das Mischungsverhältnis beliebig ist.

Als Komponente C) enthalten die erfindungsgemäßen Formmassen eine Mischung aufgebaut aus

C1) mindestens einer phosphorhaltigen Verbindung,

C2) Polytetrafluorethylen und

C3) gegebenenfalls eines Triazinderivates.

Die Zusammensetzung der Komponente C) beträgt im allgemeinen (bezogen auf den Gehalt der gesamten Komponente C) in den Formmassen

C1) 50 bis 99,97, bevorzugt 70 bis 94,8 und insbesondere 70 bis 93,9 Gew.-%

C2) 0,03 bis 2, bevorzugt 0,2 bis 1 und insbesondere 0,2 bis 0,5 Gew.-%,

C3) 0 bis 45, bevorzugt 5 bis 30 und insbesondere 6 bis 20 Gew.-%.

Der Gehalt der Komponente C) in den erfindungsgemäßen Formmassen beträgt 1 bis 30, vorzugsweise 5 bis 20 und insbesondere 5 bis 15 Gew.-% bezogen auf das Gesamtgewicht der Komponenten A bis C) und gegebenenfalls D).

Bei der Komponente C1) handelt es sich um organische und anorganische Phosphor enthaltende Verbindungen, in denen der Phosphor die Wertigkeitsstufe -3 bis +5 besitzt. Unter der Wertigkeitsstufe soll der Begriff "Oxidationsstufe" verstanden werden, wie er im Lehrbuch der Anorganischen Chemie von A.F. Hollemann und E. Wiberg, Walter des Gruyter und Co. (1964, 57. bis 70. Auflage), Seite 166 bis 177, wiedergegeben ist. Phosphorverbindungen der Wertigkeitsstufen -3 bis +5 leiten sich von Phosphin (-3), Diphosphin (-2), Phosphinoxid (-1), elementarem Phosphor (+0), hypophosphoriger Säure (+1), phosphoriger Säure (+3), Hypodiphosphorsäure (+4) und Phosphorsäure (+5) ab.

Aus der großen Zahl von phosphorhaltigen Verbindungen seien nur einige Beispiele erwähnt.

Beispiele für Phosphorverbindungen der Phosphin-Klasse, die die Wertigkeitsstufe -3 aufweisen, sind aromatische Phosphine, wie Triphenylphosphin, Tritolylphosphin, Trinonylphosphin, Trinaphthylphosphin u.a.. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a.. Besonders geeignet ist Tetranaphthyldiphosphin.

Phosphorverbindungen der Wertigkeitsstufe -1 leiten sich vom Phosphinoxid ab. Beispiele sind Triphenylphosphinoxid, Tritolylphosphinoxid. Trinonylphosphinoxid, Trinaphthylphosphinoxid. Bevorzugt ist Triphenylphosphinoxid.

Phosphor der Wertigkeitsstufe +0 ist der elementare Phosphor. In Frage kommen roter und schwarzer Phosphor. Bevorzugt ist roter Phosphor.

Phosphorverbindungen der "Oxidationsstufe" +1 sind z.B. Hypophosphite. Sie können Salzcharakter haben oder rein organischer Natur sein. Beispiele sind Calciumhypophosphit und Magnesiumhypophosphit, daneben auch Doppelhypophosphite oder komplexe Hypophosphite, oder organische Hypophosphite, wie Cellulosehypophosphitester, Ester der hypophosphorigen Säuren mit Diolen, wie z.B. von 1,10-Dodecyldiol. Auch substituierte Phosphinsäuren und deren Anhydride, wie z.B. Diphenylphosphinsäure, können eingesetzt werden. Auch Melaminhypophosphit ist geeignet. Des weiteren kommen in Frage Diphenylphosphinsäure, Di-p-Tolylphosphinsäure, Di-Kresylphosphinsäureanhydrid, Es kommen aber auch Verbindungen wie Hydrochinon-, Ethylenglykol-, Propylenglykol-bis(diphenylphosphinsäure)ester u.a. in Frage. Ferner sind geeignet Aryl(Alkyl)phosphinsäureamide, wie z.B. Diphenylphosphinsäure-dimethylamid und Sulfonamidoaryl(alkyl)phosphinsäurederivate, wie z.B. p-Tolylsulfonamidodiphenylphosphinsäure. Bevorzugt eingesetzt werden Hydrochinon- und Ethylenglykol-bis-(diphenylphosphinsäure)ester und das Bisdiphenylphosphinat des Hydrochinons.

Phosphorverbindungen der Oxidationsstufe +3 leiten sich von der phosphorigen Säure ab. Geignet sind cyclische Phosphonate, die sich vom Pentaerythrit, Neopentylglykol oder Brenzkatechin ableiten. Ferner ist Phosphor der Wertigkeitsstu£e +3 in Triaryl(alkyl)phosphiten, wie z.B. Triphenylphosphit, Tris(4-decylphenyl)phosphit, Tris(2,4-di-tert.-butylphenyl)phosphit oder Phenyldidecylphosphit u.a. enthalten. Es kommen aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Besonders bevorzugt werden Methylneopentylphosphonat (Methanphosphonsäuremethylester) und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenylbis(3,5,5-trimethylhexyl)phosphat, Ethyldiphenylphosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-phenylphosphat, Di(nonyl)-

phenylphosphat, Phenylmethylhydrogenphosphat, Di(dodecyl)-p-tolylphosphat, p-Tolyl-bis(2,5,5-trimethylhexyl)phosphat oder 2-Ethylhexyldiphenylphosphat. Besonders geeignet sind Phosphorverbindungen, bei denen jeder Rest ein Aryloxi-Rest ist. Ganz besonders geeignet ist Triphenylphosphat.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, halogenfreien organischen Phosphorverbindungen mit Phosphor in der Polymerkette entstehen beispielsweise bei der Herstellung von pentacyclischen, ungesättigten Phosphindihalogeniden, wie es beispielsweise in der DE-A 20 36 173 beschrieben ist. Das Molekulargewicht gemessen durch Dampfdruckosmometrie in Dimethylformamid, der Polyphospholinoxide soll im Bereich von 500 bis 7.000, vorzugsweise im Bereich von 700 bis 2.000 liegen.

Der Phosphor besitzt hierbei die Oxidationsstufe -1.

Ferner können anorganische Koordinationspolymere von Aryl(Alkyl)-phosphinsäurenwie z.B. Poly-$\beta$-natrium(I)-methylphenylphosphinat eingesetzt werden. Ihre Herstellung wird in DE-A 31 40 520 angegeben. Der Phosphor besitzt die Oxidationszahl +1.

Weiterhin können solche halogenfreien polymeren Phosphorverbindungen durch die Reaktion eines Phosphonsäurechlorids, wie z.B. Phenyl-, Methyl-, Propyl-, Styryl- und Vinylphosphonsäuredichlorid mit bifunktionellen Phenolen, wie z.B. Hydrochinon, Resorcin, 2,3,5-Trimethylhydrochinon, Bisphenol-A, Tetramethylbisphenol-A oder entstehen.

Weitere halogenfreie polymere Phosphorverbindungen, die in den erfindungsgemäßen Formmassen enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US-PS 4 403 075) hergestellt werden. In Frage kommt aber auch das an organische Poly(ammoniumphosphat).

Es können auch oligomere Pentaerythritphosphite, -phosphate und -phosphonate gemäß EP-B 8 486, z.B. Mobil Antiblaze® 19 (eingetragenes Warenzeichen der Firma Mobil Oil) verwendet werden.

Ganz besonders bevorzugt zum Einsatz gelangen Triphenylphosphinoxid, Triphenylphosphat, Hydrochinon-bis-(diphenylphosphinsäure)ester und Methylneopentylphosphat (Methanphosphonsäureneopentylester) sowie Mobil Antiblaze 19, wobei diese Verbindungen allein oder in beliebigen Mischungsverhältnissen zugesetzt werden können.

Als Komponente C2) enthält die erfindungsgemäße Flammschutzkombination Polytetrafluorethylen, welches als Pulver oder als wäßrige Dispersion eingesetzt werden kann.

Bevorzugt sind wäßrige Dispersionen, deren Feststoffgehalt im allgemeinen 5 bis 80 Gew.-% beträgt und übliche oberflächenaktive Hilfsmittel (Dispergiermittel) wie Fluortenside, Alkylsulfonate, Glycerinester, Polyglykole oder Salze von Fettsäuren z.B. Castearat, enthalten.

Das pulverförmige Polytetrafluorethylen kann üblicherweise mittels Suspensions- oder Emulsionspolymerisation und nach bekanntem Koagulationsverfahren (z.B. Gefrierkoakulation) oder anderen Trocknungsverfahren (z.B. Sprühtrocknung) hergestellt werden.

Die PTFE-Polymere sind Polymere mit einem Fluorgehalt zwischen 65 und 76 Gew.-%, bevorzugt zwischen 70 und 76 Gew.-%. Neben Homopolymerisaten des Tetrafluorethylens kommen hierfür auch Copolymere des Tetrafluorethylens mit anderen fluorhaltigen Monomeren wie z.B. Hexafluorpropen, oder Copolymere des Tetrafluorethylens mit geringen Mengen fluorfreier copolymerisierbarer ethylenisch ungesättigter Monomerer in Betracht. Die Herstellung von Tetrafluorethylenpolymerisaten ist bekannt und z.B. in Houben-Weyl, Methoden der organischen Chemie, Band 14/1, Seiten 842-849, Stuttgart 1961, beschrieben.

Die gemäß der Erfindung gegebenenfalls enthaltenden Triazinderivate (Komponente C3) sind im allgemeinen Melamin sowie dessen Reaktionsprodukte mit organischen oder anorganischen Säuren.

Bevorzugt sind Melamin (Formel I) und Melamincyanurat, wobei letzteres ein Reaktionsprodukt aus vorzugsweise äquimolaren Mengen von Melamin und Cyanursäure bzw. Isocyanursäure (Formeln IIa und IIb) ist.

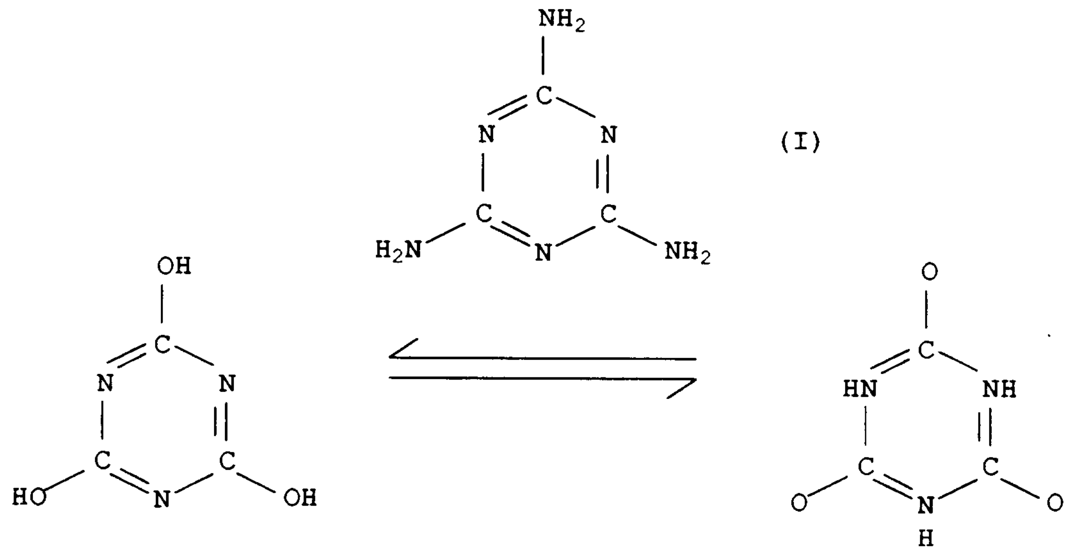

(I)

(IIa)
Enolform

(IIb)
Ketoform

Man erhält es z.B. durch Umsetzung von wäßrigen Lösungen der Ausgangsverbindungen bei 90 bis 100`C. Das im Handel erhältliche Produkt ist ein weißes Pulver mit einer mittleren Korngröße $d_{50}$ von 69 µm.

Darüber hinaus sind Melaminoxalat, Melaminphosphat, Melaminborat oder Melaminstearat als Komponente C3) geeignet.

Es können auch Mischungen der o.g. Triazinderivate eingesetzt werden, wobei das Mischungsverhältnis beliebig ist.

Bevorzugte Kombinationen (1) bis (3) sind Mischungen aus Triphenylphosphat gegebenenfalls mit Triphenylphosphinoxid mit Polytetrafluorethylen sowie Melamin.

Als Komponente D) können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 60, insbesondere nicht mehr als 50 und ganz besonders nicht mehr als 30 Gew.%, bezogen auf das Gesamtgewicht der Komponente A) bis D).

Als Zusatzstoffe seien genannt Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Auch niedermolekulare oder hochmolekulare Polymere kommen als Zusatzstoffe in Betracht, wobei Polyethylenwachs als Gleitmittel besonders bevorzugt ist.

Als Zusatzstoffe seien Schlagzähmodifier genannt, die in Mengen bis zu 20 Gew.-%, bevorzugt bis zu 15 Gew.-% enthalten sein können und welche verschieden von der Komponente B) sind.

Geeignet sind übliche Kautschuke, z.B. Acrylatkautschuk und Polymerisate konjugierter Diene, wie Polybutadienkautschuk und Polyisoprenkautschuk. Die Dienpolymerisate können, in an sich bekannter Weise, teilweise oder vollständig hydriert sein. Außerdem kommen z.B. in Betracht: Acrylnitrilbutadienkautschuk, hydrierter Styrolbutadienkautschuk, Ethylen-Propylen-Dien-Kautschuk, Polybutylen- und Polyoctenamerkautschuke, Ionomere, Blockcopolymere aus vinylaromatischen Monomeren mit Dienen wie Butadien oder Isopren (an sich bekannt aus EP-A 62 282) mit dem Aufbau $M^1M^2$-, $M^1M^2M^1M^2$- oder $M^1M^2M^1$-, wobei diese Blockpolymerisate auch Segmente mit statistischer Verteilung der Komponenten enthalten können, sowie Stern-Block-Copolymere. Als besonders geeignet haben sich Polymerisate konjugierter Diene wie Polybutadienkautschuk oder Polyisoprenkautschuk erwiesen. Derartige synthetische Kautschuke sind dem Fachmann geläufig und zusammenfassend in "Ullmanns Encyklopädie der Technischen Chemie", 4. Auflage, Bd. 13, Seiten 595 bis 634, Verlag Chemie GmbH, Weinheim 1977, beschrieben.

Als Pigmente kommen z.B. in Frage $TiO_2$ und Ruße.

Bei Verwendung von $TiO_2$ liegt die mittlere Teilchengröße im Bereich von 50 bis 400 um, insbesondere 150 bis 240 nm. Techn. Verwendung finden Rutile und Anatas, die gegebenenfalls mit Metalloxiden, z.B. Al-oxid, Si-Oxiden, Oxiden des Zn oder Siloxanen beschichtet sind.

Über Art und Menge dieser Zusatzstoffe lassen sich die gewünschten Eigenschaften der Endprodukte in weitem Maße steuern.

Die Herstellung der erfindungsgemäßen thermoplastischen Formmassen erfolgt zweckmäßigerweise durch Mischen der Komponenten bei Temperaturen im Bereich von 250 bis 320 °C in üblichen Mischvorrichtungen, wie z.B. Knetern, Banburymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls drei Komponenten vorgemischt sein oder es können auch alle Komponenten gemeinsam gemischt werden.

Die Verweilzeiten betragen im allgemeinen 0,5 bis 30 min, vorzugsweise 1 bis 5 min.

Die Herstellung der erfindungsgemäßen thermoplastischen Formmassen ist an sich nicht kritisch, jedoch haben sich einige Verfahren als besonders geeignet erwiesen.

So kann beispielsweise aus dem Komponenten A) und/oder B) mit C1) und C2) sowie gegebenenfalls C3) und/oder D) ein Granulat hergestellt werden. Auf dieses Granulat kann nun die Komponente C2) als wäßrige Dispersion aufgetragen werden, wobei in einer bevorzugten Ausführungsform die Temperatur des Granulates von 0 bis 130 °C, bevorzugt 10 bis 100 °C und insbesondere 15 bis 30 °C beträgt. Geeignete Vorrichtungen sind z.B. Fallmischer, Fluidmischer, Trommel- oder Ringmischer. Für weitere Einzelheiten sei hier auf Vauck, Müller, Grundoperationen chemischer Verfahrenstechnik, 5. Aufl. VEB Deutscher Verlag für Grundstoffindustrie, Leipzig 1978 verwiesen.

In einem weiteren bevorzugten Verfahren zur Herstellung der erfindungsgemäßen thermoplastischen Formmassen wird die Komponente C2) als wäßrige Dispersion mittels einer 2. Zudosiereinrichtung (z.B. Flüssigkeitspumpen) in die Schmelze der Komponenten A), B) und C1) sowie gegebenenfalls C3) und/oder D) zugegeben.

Die erfindungsgemäßen Formmassen eignen sich gut zur Herstellung von Formteilen aller Art, z.B. durch Spritzguß oder Extrusion. Weiterhin eignen sie sich insbesondere zur Herstellung von Folien und Halbzeugen im Tiefzieh- und Blasverfahren.

Die Formkörper weisen bei einer guten Fließfähigkeit und Schlagzähigkeit eine helle Eigenfarbe und gute Flammschutzeigenschaften auf.

Infolge dieses Eigenschaftsspektrums eignen sich diese Formkörper besonders für Anwendungen als Gehäuseteile sowie zur Herstellung von Folien und Halbzeugen im Tiefziehverfahren.

Beispiele

Es wurden folgende Komponenten eingesetzt:

Komponente A:

A(1): Poly-2,6-dimethyl-1,4-phenylenether mit einem mittleren Molekulargewicht ($M_w$) von 16000.
A(2): Poly-2,6-dimethyl-1,4-phenylenether mit einem mittleren Molekulargewicht ($M_w$) von 24 000.
A(3): Poly-2,6-dimethyl-1,4-phenylenether mit einem mittleren Molekulargewicht ($M_w$) von 40 000 (zum Vergleich).

Komponente B:

Schlagfestes Polystyrol® KR 2797 (BASF AG) mit 13 Gew.-% Polybutadien, mittlere Teilchengröße ($d_{50}$-Wert) 2-3 µm).

Komponente C1:

Triphenylphosphinoxid

Komponente C2:

Polytetrafluorethylen als Teflon® 30 N-Dispersion (Firma Du Pont, US)

Komponente C3:

Melamin

Herstellung der Formmassen

Die Komponenten A, B und C1) sowie gegebenenfalls C3) wurden bei 280 °C auf einem Zweischneckenextruder gemischt und aufgeschmolzen. Zu der homogenen Schmelze wurde mittels einer Flüssigpumpe die Komponente C3) als 60 gew.-%ige wäßrige Dispersion in einer weiteren Zone des Extruders zugegeben. Der Schmelzstrang wurde durch ein Wasserbad geführt und granuliert. Das getrocknete Granulat wurde bei 280 °C zu Rundscheiben (60 x 2 mm) und Normkleinstaben gespritzt.

Die Flammschutzprüfung erfolgte im vertikalen Brandtest nach UL 94 an 1,6 mm Teststäbchen nach den Vorschriften der Underwriter Laboratories zwecks Einordnung in eine der Brandklassen nach UL 94 VE-0, UL 94 VE-1 oder UL 94 VE-2.

Der MVI wurde bei 250 °C und 21,6 kg Belastung nach DIN 53 735 gemessen.

Die Kerbschlagzähigkeit $a_k$ bei Raumtemperatur wurde nach DIN 53 453 bestimmt.

Die Farbqualität der Produkte wurde durch Remissionsmessungen an 60 mm Rundscheiben (gemäß Cielab, DIN 6164) beurteilt.

Die Ergebnisse der Messungen und die Zusammensetzung der Formmassen sind den Tabellen zu entnehmen.

Tabelle 1: Zusammensetzung der Formmassen

| Beispiele | Komponente A | Komponente B | Komponente C1 | Komponente C2 | Komponente C3 |
|---|---|---|---|---|---|
| | [Gew.-%] | [Gew.-%] | [Gew.-%] | [Gew.-%] | [Gew.-%] |
| 1 | A(1) 45 | 45 | 9.8 | 0.2 | - |
| 2* | A(3) 45 | 45 | 9.8 | 0.2 | - |
| 3 | A(2) 34 | 55 | 9.0 | 0.4 | 1.6 |
| 4* | A(2) 34.1 | 55.3 | 9.0 | - | 1.6 |

*) zum Vergleich

Tabelle 2: Eigenschaften der Formmassen

| Beispiele | MVI | $a_k$ | Remission | Brandprüfung | UL 94 |
|---|---|---|---|---|---|
| | [ml/10'] | [kJ/m$^2$] | [%] | 1.6 mm | 3.2 mm |
| 1 | 190 | 8.2 | 51 | V0 | V0 |
| 2* | 27 | 8.6 | 47 | V0 | V0 |
| 3 | 230 | 8.1 | 55 | V1 | V0 |
| 4* | 38 | 8.5 | 54 | V2 | V0 |

*) zum Vergleich

## Patentansprüche

1. Selbstverlöschende thermoplastische Formmassen, enthaltend

A) 4 - 94 Gew.-% eines Polyphenylenethers mit einem mittleren Molekulargewicht $\overline{M}_w$ von 8000 bis 30 000,

B) 5 - 94 Gew.-% eines vinylaromatischen Polymeren
C) 1 - 30 Gew.-% eines Flammschutzmittels aufgebaut aus
C1) mindestens einer phosphorhaltigen Verbindung
C2) Polytetrafluorethylen
C3) gegebenenfalls eines Triazinderivates
sowie
D) 0 - 60 Gew.-% sonstiger Zusatzstoffe in wirksamen Mengen.

**2.** Selbstverlöschende thermoplastische Formmassen nach Anspruch 1, enthaltend
A) 15 - 80 Gew.-%,
B) 10 - 80 Gew.-%,
C) 5 - 20 Gew.-%.

**3.** Selbstverlöschende thermoplastische Formmassen nach den Ansprüchen 1 oder 2, in denen die Komponente C) aus

50 - 99,97 Gew.-% C1)
0,03 - 2 Gew.-% C2)
0 - 45 Gew.-% C3)

aufgebaut ist, wobei sich die Gewichtsangaben auf den Gesamtgehalt der Komponente (C) beziehen.

**4.** Selbstverlöschende thermoplastische Formmassen nach den Ansprüchen 1 bis 3, in denen die Komponente A) ein mittleres Molekulargewicht $\overline{M}_w$ von 12 000 bis 25 000 aufweist.

**5.** Selbstverlöschende thermoplastische Formmassen nach den Ansprüchen 1 bis 4, in denen die Komponente C1) aus einem organischen Phosphinoxid oder einem organischen Phosphat oder deren Mischungen aufgebaut ist.

**6.** Verfahren zur Herstellung der selbstverlöschenden thermoplastischen Formmassen gemäß den Ansprüchen 1 bis 5, dadurch gekennzeichnet, daß man die Komponente C2) in Form einer wäßrigen Dispersion auf ein Granulat der Komponente A) oder B) bei einer Temperatur von 0 bis 130 °C aufträgt.

**7.** Verfahren zur Herstellung der selbstverlöschende thermoplastischen Formmassen gemäß den Ansprüchen 1 bis 5, dadurch gekennzeichnet, daß die Komponente C2) in Form einer wäßrigen Dispersion der Schmelze der Komponenten A, B und C1) sowie gegebenenfalls C3) und/oder D) zugegeben wird.

**8.** Verwendung der selbstverlöschenden thermoplastischen Formmassen gemäß den Ansprüchen 1 bis 5 zur Herstellung von Fasern, Folien und Formkörpern.

**9.** Formkörper, erhältlich aus den selbstverlöschenden thermoplastischen Formmassen gemäß den Ansprüchen 1 bis 5.